# EUROPEAN PATENT SPECIFICATION

(11) **EP 0 650 559 B1**
(45) Date of publication and mention of the grant of the patent: **28.05.1997**
(21) Application number: 93912694.2
(22) Date of filing: 25.06.1993
(51) Int. Cl.: F16B 3/00

(54) **SCOTCHING OR SUPPORTING WEDGE**
HEMM- ODER STÜTZKEIL
CLAVETTE D'ASSEMBLAGE OU DE SUPPORT

(30) Priority: 29.06.1992 DK 855/92
(43) Date of publication of application: 03.05.1995
(73) Proprietor: ARILDSEN, Claus Sloth, DK-3550 Slangerup (DK)
(72) Inventor: ARILDSEN, Claus Sloth, DK-3550 Slangerup (DK)
(74) Representative: Stellinger, Jens-Holger
(86) International application number: DK9300209
(87) International publication number: WO9400698

(56) References cited:
- GB-A- 1 190 086
- GB-A- 2 106 609
- US-A- 3 836 118

## Description

This invention relates to a scotching or supporting wedge for filling in a space between two constructional parts, as for example in scotching of building components, installation of thermal windows, or placement between floorboards and underlying joists as support for parquet flooring, in which such scotching is commonly effected using two wedges, the faces of which are provided with transverse and transversally-oriented teeth having a serrated profile with serrations pointing towards the thickest end of the wedge, and in which each wedge face is provided throughout its length with guide mechanisms so that in the scotched position the two wedge faces are securely locked together by means of the transverse teeth and the guide mechanisms.

Such scotching wedges are known for example from GB-A-2106609, where a wedge with transverse ridges and a slot providing a guide means is disclosed. The transverse ridges of mainly sinusodial profile cannot perform the functions of locking the wedges from a sliding towards the thin end, and when sliding on each other, the wedges do not slide on all the surface of each other, but only on part of it. This is evident, as the ridges are not serrated. The risk is that the wedges are riding on each other on the top of the ridges, thereby being unstable or causing wear when used. A kind of "interlocking" between the wedge faces can only occur in very coarse steps, namely the "wavelength" of the sinusodial profile. Saw-tooth widges are also mentioned.

The slot providing a guide means has a V-shaped cross section and is therefore dependent on a complementary formation on a mating wedge. This dependency is very strict, as two identical wedges with identical guide means will never perform the designed function. The V-shaped cross section will not be dependent on the butting of the ridges, as all side control is taken over by the V-shaped guide means.

Also, Danish patent application no. 861/72, and Danish Patent specifications no. 141414 and 144280 are known. Danish patent application no. 861/72 relates to a supporting wedge made of plastic, with wedge faces constructed as alternate projections and recesses in order to save on material and increase lightness and sound insulation when installed. Danish Patent specification no. 141414 relates to a wedge which is similar, but which by slightly offsetting the centre row of blocks of serrated teeth, prevents transverse displacement of the complemental wedge during scotching. Finally, Danish Patent specification no. 144280 relates to a scotching wedge of basic wedge shape, in which transverse displacement of the complemental wedge is prevented by means of guide mechanisms constructed as a longitudinal profile in the wedge face.

US-A-3836118 also relates to a ribbed wedge with a slot, but also this wedge has the drawback of being dependant on a complementary formation on a mating wedge.

Whereas the second of the known wedge constructions referred to above does not contain guide mechanisms to prevent transverse displacement of two complemental wedges during erection thereof, the two next constructions mentioned each evidence solutions to this problem. The drawback with both these solutions, however, is that - particularly in the event of a slight transverse displacement of one wedge relative to the other - there is the possibility that the guide mechanisms for preventing such displacement may at the same time also prevent a number of transverse serrated teeth from locking firmly with the corresponding serrated teeth in the complemental wedge due to "riding" of the teeth on the guide mechanisms. This leads to a defective interlock between two wedge faces in those areas of these faces where the serrated teeth are prevented from engaging. This causes slightly distorted scotching of the relevant constructional parts during erection, and in the case of for example parquet flooring this may therefore give rise to floor creaking which is often very annoying and difficult to remedy.

It is therefore the object of this invention to establish a scotching or supporting wedge of the aforementioned type which remedies the described drawbacks associated with usage of the wedge, thereby avoiding that the wedges are riding on each other on the top of the ridges and the dependency of complementary formation on mating wedges, while retaining the otherwise well-known advantages of the locking of such wedges provided with serrated teeth.

This object is realised by means of a wedge of the type which is described in the introduction to claim 1 and which is characterised by the features of the characterising part of claim 1.

In order to avoid the dependency of complementary formation on mating wedges, a certain degree of symmetrical arrangement of the mating wedges is necessary, thereby upward limiting the distance from the bottom of the slot to the peak of the serrated teeth to ½A. The bottom of the slot is thereby elevated to a position approximately ½A from the bottom of the groove between the teeth. The elevated bottom has on the sides small triangle shaped external surfaces also contributing to the guide means. It is essential, that the wedges are formed so as to function at least as pairs, thereby securing, that the guide means have a complemental wedge face to cooperate with.

A more detailed explanation of the invention will be given below with reference to the ddrawing in which:
- Fig. 1: is a perspective picture of a wedge, and
- Fig. 2: shows a scaled-up detail of Figure 1, also in perspective view.

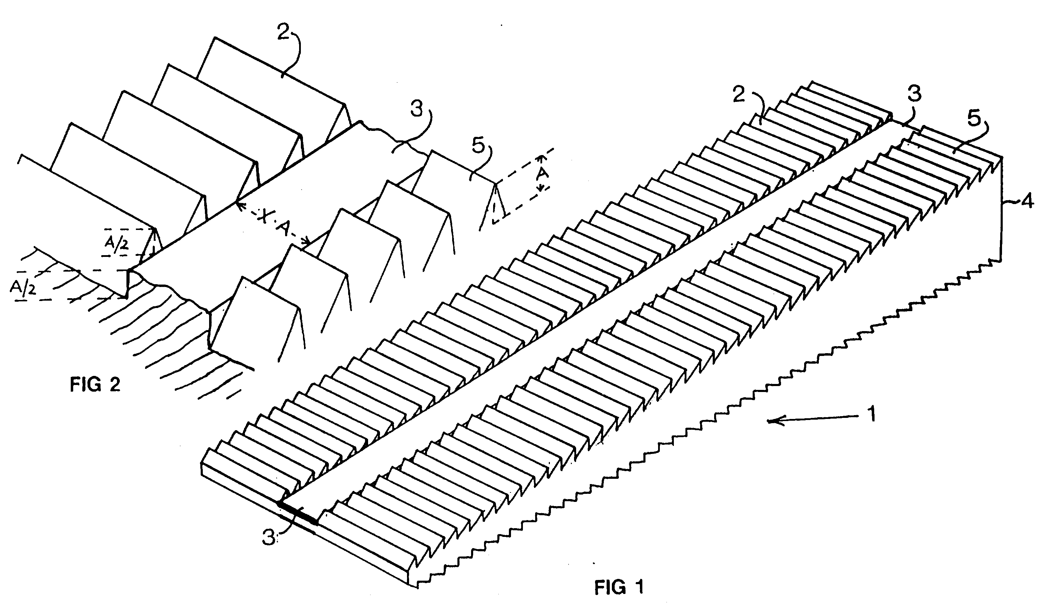

Figure 1 shows a wedge 1 in which each face is provided with transverse and transversally-oriented serrated teeth 2, 5 which point toward the thick end 4 of the wedge. The wedge faces embody at least one longitudinal slot, the bottom of which forms an elevated bottom 3, which is the top face of a rail, and which acts as a guide mechanism for a corresponding rail in a complemental wedge face.

The transverse profile of the elevated bottom 3 is of rectangular construction, cf. Figure 2, and has a depth which is equal to ½A, where A is the height of a serrated transverse tooth 2, 5, and a width which is equal to X·A, where X evidently is greater than zero and in practice will often be around 1.5. The construction of the elevated bottom 3 means that serrations 2 and 5 respectively engage corresponding serrations in the complemental wedge face as guide mechanisms in established fashion when two wedge surfaces are placed against each other during erection, thus preventing longitudinal displacement. At the same time, according to this invention, their respective, outer, upward- and downward-facing serration parts in a groove between two serrations on the complemental wedge face descend on either side of the elevated bottom in this wedge face, as the top parts of the opposed vertical end faces on each serration 2, 5 make contact with the similarly vertical, side faces of the rail in the complemental wedge face, thus preventing relative sideways displacement of the wedges.

The construction of the wedge according to this invention will thus always ensure that two complemental wedge faces with serrated teeth are fully interlocked with each other on their common contact surfaces.

## Claims

1. A scotching or supporting wedge (1) for filling in a space between two constructional parts, in which each wedge face is provided with transverse and transversally-oriented teeth (2, 5) having a serrated profile, the serrations of which point towards the thickest end (4) of the wedge, and in which each wedge face is provided throughout its length with a guide mechanism, the guide mechanism being comprised of at least one slot in the transverse serrated teeth (2, 5) and having a rectangular transverse profile, **characterised in that** the slot is formed above a rail, the top surface of the rail forming the bottom of the slot and being elevated above the bottoms of the serrations, and the distance from the elevated bottom (3) of the slot to the peak of the serrated teeth is smaller than or equal to ½A, where A is the height of the transverse serrated teeth (2, 5), so that the upper sections of the opposing vertical end faces of each serration (2, 5) can make contact with the similarly vertical, side faces of the corresponding external sides of the rail in a complemental wedge face.

## Patentansprüche

1. Ein hemmender oder stützender Keil (1) zum Ausfüllen eines Raums zwischen zwei Bauteilen, bei welchem jede Keilfläche mit querliegenden oder quergerichteten Zähnen (2, 5) versehen ist, die ein sägezahnförmiges Profil aufweisen, dessen Verzahnungen nach dem dickeren Ende (4) des Keils zeigen, und bei welchem jede Keilfläche an ihrer Länge entlang mit einer Führungseinrichtung versehen ist, wobei die Führungseinrichtung mindestens einen Schlitz in den querliegenen sägezahnförmigen Zähnen (2, 5) umfaßt und ein rechtechiges Querprofil aufweist, **dadurch gekennzeichnet, daß** der Schlitz auf einer Schiene ausgebildet ist, wobei die Oberseite der Schiene den Boden des Schlitzes bildet und über den Böden der Verzahnungen erhöht ist und der Abstand von dem erhöhten Boden (3) des Schlitzes zur Spitze der sägezahnförmigen Zähne kleiner als oder gleich ½ A ist, wobei A die Höhe der querliegenden Zähne (2, 5) darstellt, damit die oberen Abschnitte der gegenüberliegenden vertikalen Endflächen jeder Verzahnung (2, 5) mit den ebenfalls vertikalen Seitenflächen der entsprechenden Außenseiten der Schiene in einer komplementären Keilfläche in Berührung kommen können.

## Revendications

1. Cale (1) pour calage ou support pour emplacement entre deux composants de construction, chaque côté de la cale étant muni de dents transversales ou orientées transversalement (2, 5) ayant un profil à rainures, lesdites rainures pointant vers le bout le plus épais (4) de la cale, et dans lequel chaque côté de la cale est muni en toute sa longueur d'un mécanisme de guidage, ledit mécanisme de guidage comportant au moins une gorge dans les dents à rainures transversales (2, 5) et ayant un profil transversal rectangulaire, **caractérisé en ce que** la gorge est formée au dessus d'un rail, la partie supérieure du rail formant le fond de la gorge et étant surélevée par rapport à la partie inférieure des rainures et l'écart entre le fond surélevé (3) de la gorge et le sommet des dents rainurées étant inférieur à ou égal à ½ A, A étant la hauteur des dents à rainures transversales (2, 5), de façon que les sections superieures des faces verticales opposées de chaque rainure (2, 5) puissent venir en contact avec les faces latérales également verticales des côtés extérieurs correspondants du rail d'une face de cale complémentaire.
